# EUROPÄISCHE PATENTSCHRIFT

(11) **EP 2 221 095 B1**
(45) Veröffentlichungstag und Bekanntmachung des Hinweises auf die Patenterteilung: **07.11.2012**
(21) Anmeldenummer: 10152218.3
(22) Anmeldetag: 01.02.2010
(51) Int. Cl.: B01D 35/02, B01D 46/00, F16L 21/08

(54) **Filtereinrichtung zur Filtration von Fluid**
Filter device for filtering fluids
Dispositif de filtre destiné à la filtration de fluide

(30) Priorität: 02.02.2009 DE 202009001239 U
(43) Veröffentlichungstag der Anmeldung: 25.08.2010
(73) Patentinhaber: MANN + HUMMEL GMBH, 71638 Ludwigsburg (DE)
(72) Erfinder: Walz, Stefan, 71691 Freiberg a. N. (DE); Kosicki, Jürgen, 74391 Erligheim (DE); Streich, Joachim, 71679 Asperg (DE); Hanselmann, Markus, 74348 Lauffen a. N. (DE); Jessberger, Thomas, 71679 Asperg (DE)

(56) Entgegenhaltungen:
- WO-A1-2008/043611
- DE-C1- 19 613 846
- DE-U1- 9 202 148

## Beschreibung

### Technisches Gebiet

Die Erfindung betrifft eine Filtereinrichtung zur Filtration von Fluid, insbesondere von Verbrennungsluft einer Brennkraftmaschine, mit einem aus wenigstens zwei Gehäuseteilen zusammengesetzten Filtergehäuse, wobei das Filtergehäuse einen Einlass für zu filterndes Fluid und einen Auslass für gefiltertes Fluid aufweist, und mit einem Filterelement, das in dem Filtergehäuse derart angeordnet ist, dass der Einlass dichtend von dem Auslass getrennt ist, und mit einer lösbaren Verankerungseinrichtung zur Vierbindung der beiden Gehäuseteile.

### Stand der Technik

Aus der WO 2008/043611 A1 ist eine Filtereinrichtung, insbesondere zur Filtration von Verbrennungsluft in Brennkraftmaschinen, bekannt, mit einem in einem Filtergehäuse angeordneten schlauchförmigen Filterelement. Die Wandung des Filterelements separiert die Rohseite und die Reinseite der Filtereinrichtung radial. Das schlauchförmige Filterelement ist an einem Trägerteil gehalten. Das Trägerteil ist zwischen ein Rohfluidrohr und ein Reinfluidrohr einsetzbar, die zu einem durchgehenden Strömungsrohr zusammenzusetzen sind. Benachbart zu den axialen Stirnseiten des Trägerteils sind in die Wandung des Trägerteils mehrere Rastausnehmungen eingebracht, die über den Umfang verteilt angeordnet sind. Die Rastausnehmungen dienen dazu, das Trägerteil zwischen den Fluidrohren fest, jedoch lösbar zu verankern. An der Außenwandung der Fluidrohre sind hierzu Rastnasen ausgebildet, die in die korrespondierenden Rastausnehmungen des Trägerteils rastend einragen, so dass die Fluidrohre mit dem Trägerteil in Achsrichtung verrastet sind.

Die Filtration von Verbrennungsluft ist für eine ordnungsgemäße Funktionstüchtigkeit einer Brennkraftmaschine sowie der Nebenaggregate der Brennkraftmaschine wie z.B. einem Verdichter von erheblicher Bedeutung. Fehlluftströme, die das Filterelement umgehen, müssen daher ausgeschlossen sein. Dies erfordert einerseits einen sicheren und festen Sitz des Filterelements im Strömungsweg der Verbrennungsluft, andererseits muss das Filterelement für regelmäßige Wartungsarbeiten leicht auszutauschen sein. Darüber hinaus muss eine Falschmontage und/oder die Montage eines ungeeigneten Filterelements ausgeschlossen werden, um Schäden an der Filtereinrichtung bei der Montage oder an einer Vorrichtung, der das unter Umständen unzureichend gefilterte Fluid zugeführt wird, zu verhindern. Eine gattungsgemäße Filtereinrichtung ist z. B. aus der DE 196 13 846 C1 bekannt. Dort wird eine Verbindungseinrichtung für zwei Körper einer fluiddurchströmten Baugruppe vorgeschlagen. Jeder Köper verfügt über mindestens eine Haltepartie, mittels derer die aneinandergesetzten Körper durch eine Drehbetätigung der Haltepartien miteinander verbindbar sind.

Der Erfindung liegt die Aufgabe zugrunde, mit einfachen konstruktiven Maßnahmen eine Filtereinrichtung zu schaffen, bei der Fehlluftströme zur Umgehung des Filterelements sicher vermieden werden und die sich zugleich durch eine leichte Austauschbarkeit des Filterelements auszeichnet und bei der eine Falschmontage oder die Montage eines falschen Filterelements ausgeschlossen ist.

### Offenbarung der Erfindung

Diese Aufgabe wird erfindungsgemäß durch eine Filtereinrichtung mit den Merkmalen von Anspruch 1 gelöst. Die Verankerungseinrichtung weist einen Dreheinsatz mit einem Führungs- und Verankerungsabschnitt auf, der drehbar mit einem ersten der Gehäuseteile verbunden ist, und eine mit dem Führungs- und Verankerungsabschnitt formschlüssig zusammenwirkende Aufnahme, die mit einem zweiten der Gehäuseteile verbunden ist, wobei der Führungs- und Verankerungsabschnitt in einem ersten Drehzustand in einem Ein-/Ausführabschnitt der Aufnahme zur Führung beim Verbinden oder Trennen der beiden Gehäuseteile formschlüssig verschoben werden kann und in einem zweiten Drehzustand in einem Verankerungsabschnitt der Aufnahme zur Verankerung der beiden Gehäuseteile formschlüssig festgelegt werden kann, wobei der Ein-/Ausführabschnitt in den Verankerungsabschnitt übergeht.

Die erfindungsgemäße Filtereinrichtung eignet sich insbesondere zur Filtration von Verbrennungsluft in Brennkraftmaschinen, darüber hinaus aber in allgemeiner Weise zur Filtration von gasförmigen und ggf. auch flüssigen Fluiden. Erfindungsgemäß sind die Gehäuseteile über die Verankerungseinrichtung in Einbauposition lösbar aneinander verankert, um bei Bedarf den Verbund öffnen und das Filterelement leicht austauschen zu können. Die Verankerungseinrichtung wirkt beim Zusammensetzen der Gehäuseteile zunächst als Vorgabe der Montageposition der Gehäuseteile relativ zueinander, so dass die beiden Gehäuseteile nicht in einer falschen Orientierung zueinander verbaut werden können. Beim Zusammenführen der Gehäuseteile in die Einbauposition wirkt die Verankerungseinrichtung als Führung gegen Verdrehung und/oder Verkantung, und verhindert so, dass sich Lücken zwischen den beiden Gehäuseteilen bzw. zum Filterelement hin bilden, welche später zu Fehlluftströmen führen können. Die Führungswirkung der Verankerungseinrichtung erleichtert also den Zusammenbau der Gehäuseteile und des Filterelements und sorgt ferner für eine korrekte Montage. In der Einbauposition kann durch Drehen des Dreheinsatzes die Verankerungseinrichtung einfach verriegelt werden und dient dann zur Verankerung der Gehäuseteile. So kann eine ungewollte Trennung oder eine Drehung oder Verschiebung der beiden Gehäuseteile zueinander verhindert und die Betriebssicherheit der Filtereinrichtung erhöht werden. Die Verankerungseinrichtung ist durch Drehen des Dreheinsatzes einfach wieder lösbar. Ein nicht ordnungsgemäßer Sitz der beiden Gehäuseteile, beispielsweise verursacht durch Schwingungen oder nicht sachgerechte Montage, ist damit praktisch ausgeschlossen. Ferner wirken der Dreheinsatz und die Aufnahme nach dem Schlüssel-Schloss-Prinzip zusammen, so dass eine Montage eines falschen Filterelements ausgeschlossen wird.

Bei einer vorteilhaften Ausführungsform kann der Führungs- und Verankerungsabschnitt in der Aufnahme nur in dem Verankerungsabschnitt vom ersten Drehzustand in den zweiten Drehzustand gedreht werden und umgekehrt. Auf diese Weise ist die Einbauposition der beiden Gehäuseteile durch den Dreheinsatz und den Verankerungsabschnitt fest vorgegeben, da nur dort in der Aufnahme eine Verriegelung durch Drehung des Dreheinsatzes möglich ist.

Bei einer weiteren vorteilhaften Ausführungsform kann einer der wenigstens zwei Gehäuseteile wenigstens teilweise in den anderen Gehäuseteil eingesteckt werden und die Aufnahme kann in einer Wand des einsteckbaren Gehäuseteils und der Dreheinsatz kann von außen betätigbar in einer Wand des anderen Gehäuseteils untergebracht sein. Beim Einschieben des inneren Gehäuseteils in das äußere Gehäuseteil kann der Führungs- und Verankerungsabschnitt des Dreheinsatzes in dem ersten Drehzustand in der Aufnahme geführt werden und in der Einbauposition von außen einfach zur Verankerung der Gehäuseteile in den zweiten Drehzustand gedreht werden. Zwischen den Wandungen der Gehäuseteile kann günstigerweise ein zusätzlicher Dichtring positioniert sein, um Fehlluftströme sicher auszuschließen.

Vorteilhafterweise kann der Führungs- und Verankerungsabschnitt des Dreheinsatzes einen länglichen geraden Steg aufweisen, der beim Drehen des Dreheinsatzes um eine in Längsrichtung des Steges mittige Querachse drehbar ist, der Ein-/Ausführabschnitt der Aufnahme kann einen geraden Schlitz aufweisen, in dem der Steg in der ersten Drehposition in Längsrichtung des Stegs verschiebbar ist, wobei zwei gegenüberliegende Längsseiten des Steges formschlüssig an entsprechenden Rändern des Schlitzes entlang gleiten können und der Verankerungsabschnitt der Aufnahme eine rotationssymmetrische Öffnung aufweisen kann, in der der Steg beim Zusammenfallen der Achse der Öffnung und der mittigen Querachse des Steges um seine mittige Querachse drehbar ist, wobei wenigstens Teile der Querseiten des Stegs formschlüssig am Rand der Öffnung entlang gleiten können. Stege, Schlitze und Öffnungen können in unterschiedlichen Materialien einfach durch Formen oder Schneiden oder Bohren realisiert werden. Der Steg kann sowohl mit dem Schlitz als auch mit der Öffnung optimal formschlüssig und zuverlässig zusammenwirken.

Ferner kann günstigerweise das Filterelement schlauchförmig ausgebildet sein. Es kann beispielsweise aus einem weichen, nachgiebigen, vliesartigen Filtermaterial bestehen, das aus synthetischen Grundstoffen bestehen kann, insbesondere auf Polymerbasis, oder auch aus natürlichen Werkstoffen, insbesondere auf Zellulosebasis. Alternativ zu einem weichen Material kommt auch ein steifes Material bzw. eine steife Ausführung in Betracht, bei der ein Paketieren von Falten des Filterelements ausgeschlossen ist.

Bei einer weiteren vorteilhaften Ausführungsform kann das Filterelement zwischen ein Einsatzrohr und ein Fluidrohr einsetzbar sein, die zu einem durchgehenden Strömungsrohr zusammenzusetzen sein können, wobei das Filterelement sich im Inneren des Strömungsrohres befinden kann, und das Einsatzrohr kann eines der Bauteile der Verankerungseinrichtung aufweisen und das Fluidrohr kann das korrespondierende Bauteil der Verankerungseinrichtung aufweisen. So ist eine platzsparende Anordnung des Filterelements in einem Strömungsrohr möglich, ohne dass ein separates Filtergehäuse erforderlich ist. Insbesondere kann das Einsatzrohr in das Fluidrohr eingesteckt werden oder umgekehrt.

Im Übrigen kann vorteilhafterweise das Filterelement an dem Einsatzrohr gehalten sein und das Einsatzrohr kann zwischen ein Rohfluidrohr und das Reinfluidrohr einsetzbar und wenigstens mit einem der beiden Rohre verankerbar sein und das Einsatzrohr kann jeweils ein Bauteil der jeweiligen Verankerungseinrichtung aufweisen und das Rohfluidrohr und/oder das Reinfluidrohr kann das jeweils korrespondierende Bauteil der Verankerungseinrichtung aufweisen. Dies hat den Vorteil, dass zum einen das Filterelement so leicht ausgetauscht werden kann, da das Filterelement mit dem Einsatzrohr ein austauschbares Modul bildet, das insbesondere für Wartungszwecke aus dem Rohrverbund entnommen und nach der Wartung bzw. dem Austausch des Filterelements wieder eingesetzt werden kann. Außerdem ist die Gefahr von Fehlluftströmen gebannt, da das Einsatzrohr einen fest vorgegebenen, dichtenden Sitz zwischen den Fluidrohren einnimmt und andererseits das Filterelement fest mit dem Einsatzrohr verbunden ist.

Eine weitere vorteilhafte Ausführungsform kann eine Rasteinrichtung und/oder eine Anschlageinrichtung zur Vorgabe des zweiten Drehzustands des Führungs- und Verankerungsabschnitts vorsehen. Auf diese Weise kann ein definierter Anschlag und eine Verrastung für den Dreheinsatz realisiert werden. Der definierte Anschlag kann nicht überdreht werden und stellt so sicher, dass der Dreheinsatz in der richtigen Drehposition zur Verriegelung montiert ist. Hierdurch wird die Montagesicherheit erhöht. Die Verrastung verhindert ferner, dass der Dreheinsatz während des Betriebs der Filtereinrichtung insbesondere in Folge von Vibrationen und/oder Temperaturveränderung unerwünscht verdreht wird und die Vierriegelung gelöst wird.

Ferner kann vorteilhafterweise die Rasteinrichtung so ausgestaltet sein, dass beim Übergang vom ersten Drehzustand in den zweiten Drehzustand ein taktiles und/oder akustisches Signal erzeugt werden kann. Ein taktiles Signal kann als erhöhter Kraftaufwand beim Drehen des Dreheinsatzes zum Überwinden der Verrastung realisiert sein. Das Überwinden der Verrastung kann alternativ oder zusätzlich zum taktilen Signal von einem Klickgeräusch begleitet sein.

Bei einer weiteren vorteilhaften Ausführungsform kann eine Dichteinrichtung, insbesondere ein Dichtring, in einem Verbindungsbereich der beiden Gehäuseteile angeordnet sein, die den Innenraum des Filtergehäuses dicht von der Umgebung trennt. Auf diese Weise wird verhindert, dass Fehlluft aus der Umgebung über den Verbindungsbereich in den Innenraum des Filtergehäuses auf die Reinluftseite oder die Rohluftseite gelangen kann.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen
- Figur 1: schematisch im Längsschnitt eine Filtereinrichtung mit einem Einsatzrohr und einem Reinfluidrohr, zwischen denen ein schlauchförmiges Filterelement eingesetzt ist und die mittels einer Verankerungseinrichtung miteinander verankert sind;
- Figur 2: schematisch einen Ausschnitt des Einsatzrohrs aus der Figur 1 mit einer Aufnahme für einen Steg eines Dreheinsatzes der Verankerungseinrichtung;
- Figur 3: schematisch den Dreheinsatz der Verankerungseinrichtung aus der Figur 1;
- Figur 4: schematisch einen Schnitt des Dreheinsatzes aus der Figur 3 entlang der dortigen Linie IV-IV;
- Figur 5: schematisch einen Schnitt des Dreheinsatzes aus der Figur 3 entlang der dortigen Linie IV-IV;
- Figur 6: schematisch die Filtereinrichtung aus der Figur 1 beim Zusammenbau der beiden Fluidrohren, wobei der Dreheinsatz aus den Figuren 3 bis 5 in einem ersten Drehzustand ist;
- Figur 7: schematisch eine Detailansicht der Innenseite eines zu dem Einsatzrohr aus der Figur 1 ähnlichen Einsatzrohrs, bei dem die Aufnahme Endanschläge und Rastnasen für den Steg des Dreheinsatzes aufweist.

### Ausführungsform(en) der Erfindung

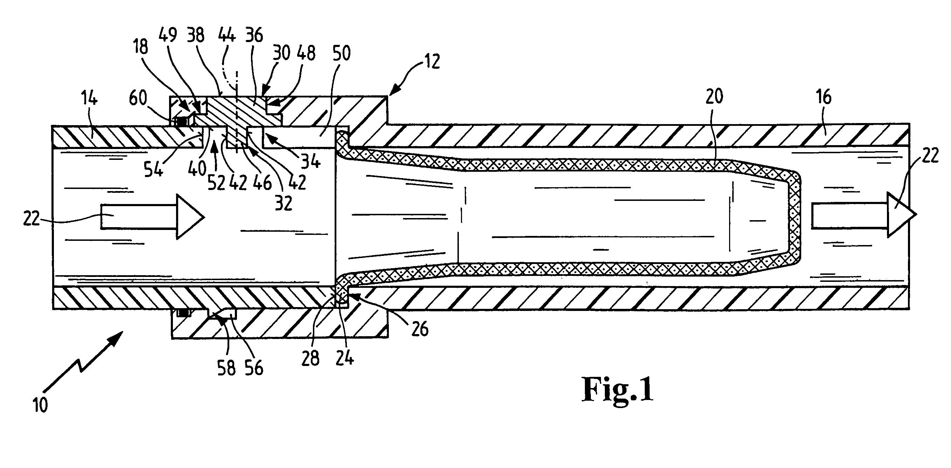

In Figur 1 ist eine insgesamt mit dem Bezugszeichen 10 versehene Filtereinrichtung dargestellt zur Filtration von Fluid, insbesondere von Verbrennungsluft einer Brennkraftmaschine.

Die Filtereinrichtung 10 umfasst ein Filtergehäuse 12 in Form eines durchgehenden Strömungsrohrs, das aus einem Einsatzrohr 14 und einem Reinfluidrohr 16 zusammengesetzt ist. Das Einsatzrohr 14 ist mit einem Endabschnitt in einem hülsenartigen, abgestuften Endabschnitt des Reinfluidrohrs 16 eingesteckt und lösbar mit einer insgesamt mit 18 bezeichneten Verankerungseinrichtung in dem Reinfluidrohr 16 verankert. Der Endabschnitt des Reinfluidrohrs 16 umgreift den axial stirnseitigen Endabschnitt des Einsatzrohrs 14. Das Einsatzrohr 14 bildet einen Einlass für zu filterndes Fluid und das Reinfluidrohr 16 bildet einen Auslass für gefiltertes Fluid.

Ein schlauchförmiges Filterelement 20 aus weichem, nachgiebigem Material ist an dem Einsatzrohr 14 sicher und ggf. auch lösbar gehalten. Das Filterelement 20 und Einsatzrohr 14 bilden eine zusammengehörende Einheit, die außerhalb ihres Einsatzortes vorgefertigt wird und als gemeinsames Filtermodul verbaut wird. Die Durchströmrichtung des zu reinigenden Fluids erfolgt in Achsrichtung wie mit den eingetragenen Pfeilen 22 dargestellt. Die Durchströmungsrichtung kann aber auch in Gegenrichtung erfolgen, also entgegengesetzt zu den eingetragenen Pfeilen 22 orientiert sein, so dass die Wandung des schlauchförmigen Filterelements 20 von außen nach innen durchströmt wird.

Das Filterelement 20 ist im Inneren des Filtergehäuses 12 zwischen dem Einsatzrohr 14 und dem Reinfluidrohr 16 so eingesetzt, dass der Einlass des Filtergehäuses 12 dichtend von dem Auslass getrennt ist. In der Einbaulage gemäß der Figur 1 ist ein stirnseitiger Abschnitt 24 des Filterelements 20 zwischen einer Stirnseite 26 einer radial innenliegenden Stufe des abgestuften Endabschnitts des Reinfluidrohrs 16 und der zugewandten Stirnseite 28 des Einsatzrohrs 14 fest und strömungsdicht eingeklemmt.

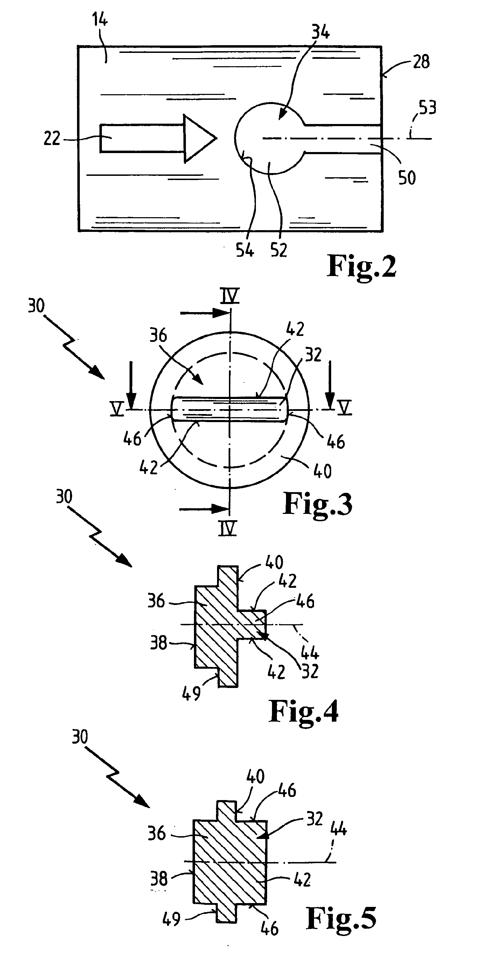

Die Verankerungseinrichtung 18 weist einen Dreheinsatz 30 mit einem Führungs- und Verankerungsabschnitt 32 auf, der drehbar mit dem Reinfluidrohr 16 verbunden ist. Der Dreheinsatz 30 ist in den Figuren 3 bis 5 im Detail gezeigt. Ferner weist die Verankerungseinrichtung 18 am Einsatzrohr 14 eine mit dem Dreheinsatz 30 formschlüssig zusammenwirkende Aufnahme 34 für den Führungs- und Verankerungsabschnitt 32 des Dreheinsatzes 30 auf. Ein Ausschnitt des Einsatzrohrs 14 mit der Aufnahme 34 ist in der Figur 2 gezeigt.

Der Dreheinsatz 30 besteht aus einem Basisabschnitt 36 und dem Führungs- und Verankerungsabschnitt 32. Der Basisabschnitt 36, in den Figuren 4 und 5 links, hat die Form eines flachen, abgestuften Rotationskörpers, dessen Stirnseiten 38 und 40 unterschiedliche Durchmesser haben.

Die kleine Stirnseite 38 des Basisabschnitts 36 ist mit einem nicht gezeigten Betätigungsschlitz oder einem andersartigen Angriffsmittel versehen, an dem zum Drehen des Dreheinsatz 30 ein Werkzeug, beispielsweise ein Schraubenzieher, angreifen kann. Es kann auch ein Angriffsmittel vorgesehen sein, das zur manuellen Betätigung ohne Werkzeug geeignet ist.

Auf der großen Stirnseite 40 des Basisabschnitts 36 ist der Führungs- und Verankerungsabschnitt 32 in Form eines länglichen geraden im Wesentlichen quaderförmigen Stegs angeordnet. Zwei längsseitige Seitenflächen 42 des Führungs- und Verankerungsabschnitts 32 erstrecken sich beidseitig einer Rotationsachse 44 des Basisabschnitts 36 parallel und in ihrer Längsrichtung senkrecht zu der Rotationsachse 44. Zwei querseitige Stirnflächen 46 des Führungs- und Verankerungsabschnitts 32 erstrecken sich beidseitig der Rotationsachse 44 auf der Umfangsfläche eines gedachten Kreiszylinders, dessen Mittelachse mit der Rotationsachse 44 des Basisabschnitts 36 zusammenfällt und eine gedachte, in den Figuren 1, 4 und 5 angedeutete, mittige Querachse des Führungs- und Verankerungsabschnitts 32 bildet.

Der Dreheinsatz 30 ist in einem durchgängigen kreisrunden Loch 48 in der Wand des Reinfluidrohrs 16 angeordnet. Das Loch 48 ist komplementär zum Basisabschnitt 36 des Dreheinsatzes 30 abgestuft. Die kleine Stirnseite 38 des Basisabschnitts 36 befindet sich auf der radial äußeren Umfangsseite des Reinfluidrohrs 16, so dass der nicht gezeigte Betätigungsschlitz von außen zugänglich ist und der Dreheinsatz 30 von außen betätigt werden kann. Beim Drehen des Dreheinsatzes 30 in dem Loch 48 dreht sich der Führungs- und Verankerungsabschnitts 32 um die Rotationsachse 44, also um seine mittige Querachse. Die Außenkonturen der großen Stirnfläche 40 des Basisabschnitts 36 geht in die Außenkonturen der radial inneren Fläche des Reinfluidrohrs 16 über, so dass die große Stirnfläche 44 das Einstecken des Einsatzrohrs 14 nicht behindert. Eine Stufe 49 des Basisabschnitts 36 liegt an einer entsprechenden Stufe des Lochs 48 an, so dass der Dreheinsatz 30 sich in dem Reinfluidrohr 16 nicht radial nach außen bewegt werden kann.

Die Aufnahme 34 für den Führungs- und Verankerungsabschnitt 32 des Dreheinsatzes 30 befindet sich in der Wand des hülsenartigen Endabschnitts des Einsatzrohrs 14. Die Aufnahme 34 hat einen Ein-/Ausführabschnitt 50 und einen Verankerungsbereich 52, die zusammenhängen und ineinander über gehen.

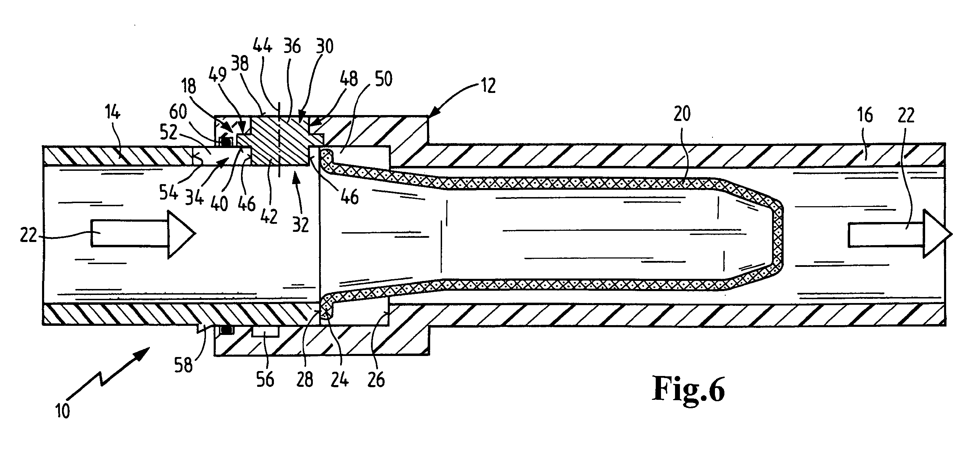

Der Ein-/Ausführabschnitt 50 ist ein gerader und durchgängiger Schlitz in der Wand des Einsatzrohrs 14. Der Ein-/Ausführabschnitt 50 erstreckt sich in Längsrichtung des Einsatzrohrs 14 von dessen der Stufe des Endabschnitts des Reinfluidrohrs 16 zugewandten Stirnseite 28 bis zu dem Verankerungsbereich 52. Der Ein-/Ausführabschnitt 50 ist zu dem Verankerungsbereich 52 und zu der Stirnseite 28 des Einsatzrohrs 14 offen. Die Ausdehnung des Ein-/Ausführabschnitts 50 in Umfangsrichtung des Einsatzrohrs 14 ist etwas größer als der Abstand der längsseitigen Seitenflächen 42 des Führungs- und Verankerungsabschnitts 32 senkrecht zu der Rotationsachse 44 des Dreheinsatzes 30 und deutlich kleiner als der Abstand der querseitigen Stirnflächen 46 des Führungs- und Verankerungabschnitts 32. In einem in der Figur 6 gezeigten ersten Drehzustand ist der Dreheinsatz 30 so orientiert, dass der Führungs- und Verankerungsabschnitt 32 parallel zur gedachten Längsmittelachse 53 des Ein-/Ausführabschnitts 50, im gezeigten Beispiel also axial zum Einsatzrohr 14, verläuft. Dann kann der Führungs- und Verankerungsabschnitt 32 zur Führung beim Verbinden oder Trennen des Einsatzrohrs 14 und des Reinfluidrohrs 16 in Längsrichtung des Führungs- und Verankerungsabschnitts 32 in dem Ein-/Ausführabschnitt 50 verschoben werden. Dabei gleiten die beiden gegenüberliegenden längsseitigen Seitenflächen 42 des Führungs- und Verankerungsabschnitts 32 formschlüssig an den entsprechenden Seitenflächen des Ein-/Ausführabschnitts 50 entlang.

Der Verankerungsbereich 52 der Aufnahme 34 ist eine durchgängige kreisrunde Öffnung in der Wand des Einsatzrohrs 14. Der Durchmesser des Verankerungsbereichs 52 ist etwas größer als die Ausdehnung des Führungs- und Verankerungsabschnitts 32 in dessen Längsrichtung. Die Mittelachse des Verankerungsbereichs 52 kreuzt die Längsmittelachse 53 des Ein-/Ausführabschnitts 50. In dem in der Figur 1 gezeigten korrekten Einbauzustand fallen die Mittelachse des Verankerungsbereichs 52 und die Rotationsachse 44 des Dreheinsatz 30 zusammen, so dass der Führungs- und Verankerungsabschnitt 32 in dem Verankerungsbereich 52 um die Rotationsachse 44, also um seine mittige Querachse, drehbar ist. Beim Drehen des Führungs- und Verankerungsabschnitts 32 im Verankerungsbereich 52 gleiten die querseitigen Stirnflächen 46 des Führungs- und Verankerungsabschnitt 32 formschlüssig an einer radial inneren Umfangsfläche 54 des Verankerungsbereichs 52 entlang. Der Führungs- und Verankerungsabschnitt 32 des Dreheinsatzes 30 kann in dem Verankerungsbereich 52 vom ersten Drehzustand in einen zweiten Drehzustand gedreht werden und umgekehrt.

Der zweite Drehzustand ist in der Figur 1 gezeigt. In dem zweiten Drehzustand ist der Dreheinsatz 30 so orientiert, dass die längsseitigen Seitenflächen 42 des Führungs- und Verankerungsabschnitts 32 senkrecht zur Längsmittelachse 53 des Ein-/Ausführabschnitts 50 verlaufen. In dem zweiten Drehzustand ist der Führungs- und Verankerungsabschnitt 32 des Dreheinsatzes 30 in dem Verankerungsbereich 52 zur Verankerung des Einsatzrohrs 14 mit dem Reinfluidrohr 16 formschlüssig festgelegt, so dass das Einsatzrohr 14 weder axial noch tangential relativ zum Reinfluidrohr 16 bewegt werden kann.

Auf der dem Loch 48 für den Dreheinsatz 30 gegenüberliegenden radial inneren Umfangsseite des Reinfluidrohrs 16 weist das Reinfluidrohr 16 eine Rastaufnehmung 56 auf. An der Außenwandung der Einsatzrohrs 14 ist eine Rastnase 58 ausgebildet, die im montierten Zustand (Figur 1) in die Rastausnehmung 56 des Reinfluidrohrs 16 rastend einragt, so dass das Reinfluidrohr 16 mit dem Einsatzrohr 14 in Achsrichtung zusätzlich verrastet ist. Die Rastausnehmung 56 und die Rastnase 58 bilden gemeinsam Rastmittel, über die auf der der Verankerungseinrichtung 18 gegenüberliegenden Seite eine lösbare zusätzliche Rast- bzw. Schnappverbindung zwischen dem Einsatzrohr 14 und dem Reinfluidrohr 16 hergestellt werden kann. So kann eine Kraft zur Verankerung gleichmäßiger auf die Rohre 14 und 16 einwirken, um einseitige Belastungen und Verkantungen zwischen den Rohren 14 und 16 zu vermeiden.

Für eine strömungsdichte Verbindung und zur Vermeidung von Fehlluftströmen ist ein Dichtring 60 zwischen dem Außenmantel des Einsatzrohrs 14 und dem Innenmantel des Reinfluidrohrs 16 angeordnet. Der Dichtring 60 trennt den Innenraum des Filtergehäuses 12 dicht von der Umgebung. Auf diese Weise wird auch dann verhindert, dass Rohluft (Nebenluft) aus der Umgebung über den Verbindungsbereich in den Innenraum des Filtergehäuses 12 gelangen kann, wenn sich die Strömungsrichtung umkehren sollte, also entgegen der Pfeile 22 verläuft. Das Loch 48 in der Wand des Reinfluidrohrs 16 ist mit einer weiteren in den Figuren 1 bis 6 nicht gezeigten Dichtung entweder gegenüber dem Dreheinsatz 30 und/oder gegenüber dem Einsatzrohr 14 abgedichtet, so dass auch dort keine Fehlluft angesaugt werden kann.

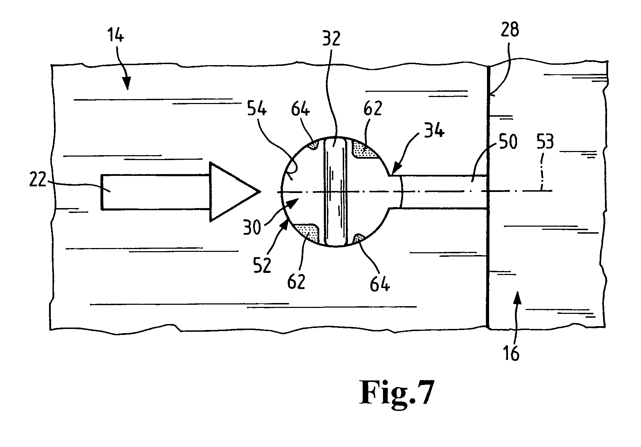

In der Figur 7 ist ein Ausschnitt eines zweiten Ausführungsbeispiels eines Einsatzrohrs 14 mit einem montierten Reinfluidrohr 16 gezeigt. Die Betrachtungsrichtung ist hier radial von Innen nach Außen. Bei dem zweiten Ausführungsbeispiel sind die Elemente, die zu denen des ersten Ausführungsbeispiels, dargestellt in den Figuren 1 bis 6 ähnlich sind, mit den gleichen Bezugszeichen versehen, so dass bezüglich deren Beschreibung auf die Ausführungen zum ersten Ausführungsbeispiel Bezug genommen wird. Das zweite Ausführungsbeispiel unterscheidet sich von ersten dadurch, dass der Verankerungsbereich 52 der Aufnahme 34 zwei Endanschläge 62 und zwei Rastnasen 64 für den Steg 32 des Dreheinsatzes 30 aufweist. Die Endanschläge 62 und Rastnasen 64 sind jeweils gegenüberliegend an der radial inneren Umfangsfläche 54 des Verankerungsbereichs 52 angeordnet und erstrecken sich jeweils zum Zentrum der Aufnahme 34. Die Rastnasen 64 sind in Bezug auf ihre Ausdehnung in radialer Richtung der Aufnahme 34 so ausgestaltet, dass sie beim Drehen des Dreheinsatzes 30 mit einem vorzugsweise spürbaren Kraftaufwand überwunden werden können. Das Überwinden der Rastnasen 64 kann auch akustisch, beispielsweise durch ein Klickgeräusch, signalisiert werden, was zur Erhöhung der Montagesicherheit beiträgt. Die Rastnasen 64 und/oder der Steg 32 können hierzu auch elastisch nachgeben. Die Ausdehnung der Endanschläge 62 radial nach innen ist größer als die der Rastnasen 64, so dass sie beim Drehen des Dreheinsatzes 30 nicht überwunden werden können. Die Endanschläge 62 und die Rastnasen 64 sind so positioniert, dass in der in Figur 7 gezeigten korrekten Verriegelungposition des Dreheinsatzes 30 der Steg 32 an beiden Querseiten jeweils zwischen einem Endanschlag 62 und einer Rastnase 64 eingerastet ist. Auf diese Weise wird die Montagesicherheit erhöht. Die Verrastung verhindert, dass der Dreheinsatz 30 während des Betriebs der Filtereinrichtung 10 beispielsweise in Folge von Vibrationen und/oder Temperaturänderungen gedreht und die Verankerungseinrichtung 18 gelöst wird.

Bei einem nicht gezeigten weiteren Ausführungsbeispiel ist das Einsatzrohr 14 in seinem dem Reinfluidrohr 16 abgewandten Endabschnitt mit einer weiteren Aufnahme 34 für einen Führungs- und Verankerungsabschnitt 32 eines Dreheinsatzes 30 eines Rohfluidrohres versehen. Das Rohfluidrohr kann so analog zu dem Reinfluidrohr 16 mit dem Einsatzrohr 14 verbunden und verankert werden. Das Einsatzrohr 14 ist auf diese Weise zwischen das Rohfluidrohr und das Reinfluidrohr 16 einsetzbar.

Bei allen oben beschriebenen Ausführungsbeispielen einer Filtereinrichtung 10 sind unter anderem folgende Modifikationen möglich:

Die Erfindung ist nicht beschränkt auf die Filtereinrichtung 10 zur Filtration von Verbrennungsluft einer Brennkraftmaschine. Vielmehr kann sie auch bei Filtereinrichtung 10 für andere auch flüssige Fluide, beispielsweise Kraftstoff, Öl oder Wasser, eingesetzt werden.

Das Filtergehäuse 12 kann statt als Strömungsrohr auch andersartig, beispielsweise als separates Gehäuse, ausgebildet sein.

Das Einsatzrohr 14 kann auch hülsenartig auf das Reinfluidrohr 16 und/oder das Rohfluidrohr aufgesteckt sein.

Statt des schlauchförmigen Filterelements 20 kann auch ein andersartiges, beispielsweise ein quaderförmiges, Filterelement in einem entsprechenden zweiteiligen Gehäuse untergebracht werden.

Statt in Modulbauweise können das Einsatzrohr 14 und das Filterelement 20 auch als separate Teile erst beim Zusammenbau mit dem Reinfluidrohr 16 funktionsgerecht miteinander verbunden werden.

Die querseitigen Stirnflächen 46 des Führungs- und Verankerungsabschnitts 32 können statt kurvig auch gerade sein, so dass lediglich ihre Kanten formschlüssig an der radial inneren Umfangsfläche 54 des Herankerungsbereichs 52 entlang gleiten.

Die längsseitigen Seitenflächen 42 und/oder die querseitigen Stirnflächen 46 des Führungs- und Verankerungsabschnitts 32 können in Richtung der Rotationsachse 44 auch profiliert, insbesondere kodiert, sein und die korrespondierenden Seitenflächen des Ein-/Ausführabschnitts 50 beziehungsweise der Umfangsfläche 54 des Verankerungsbereichs 52 können jeweils dazu komplementär profiliert sein, so dass nach dem Schlüssel-Schloss-Prinzip die Verbindung nicht zusammenpassender Bauteile nicht möglich ist.

Anstelle des Dichtrings 60 kann auch eine andersartige Dichteinrichtung verwendet werden, die in dem Verbindungsbereich des Reinfluidrohrs 16 mit dem Einsatzrohr 14 angeordnet ist und die den Innenraum des Filtergehäuses 12 dicht von der Umgebung trennt. Die Dichteinrichtung kann auch so ausgestaltet sein, dass sie den Bereich des Lochs 48 abdichtet.

## Patentansprüche

1. Filtereinrichtung (10) zur Filtration von Fluid, insbesondere von Verbrennungsluft einer Brennkraftmaschine, mit einem aus wenigstens zwei Gehäuseteilen (14, 16) zusammengesetzten Filtergehäuse (12), wobei das Filtergehäuse (12) einen Einlass für zu filterndes Fluid und einen Auslass für gefiltertes Fluid aufweist, und mit einem Filterelement (20), das in dem Filtergehäuse (12) derart angeordnet ist, dass der Einlass dichtend von dem Auslass getrennt ist, und mit einer lösbaren Verankerungseinrichtung (18) zur Verbindung der beiden Gehäuseteile (14, 16), wobei die Verankerungseinrichtung (18) einen Dreheinsatz (30) mit einem Verankerungsabschnitt, der zwischen einem ersten und einem zweiten Drehzustand drehbar an einem ersten der Gehäuseteile (16) gelagert ist, und eine mit einem zweiten der Gehäuseteile (14) verbundene Aufnahme (34) aufweist, wobei der Verankerungsabschnitt und die Aufnahme (34) derart formschlüssig miteinander zusammenwirken, dass der Verankerungsabschnitt durch Überführen von dem ersten in den zweiten Drehzustand in einem Verankerungsbereich (52) der Aufnahme (34) zur Verankerung der beiden Gehäuseteile (14, 16) formschlüssig festgelegt werden kann, **dadurch gekennzeichnet, dass** die Aufnahme (34) einen Ein-/Ausführabschnitt (50) aufweist, welcher in den Verankerungsbereich (52) der Aufnahme (34) übergeht, und dass der Verankerungsabschnitt derart als Führungs- und Verankerungsabschnitt (32) ausgebildet ist, dass er in dem ersten Drehzustand in dem Ein-/Ausführabschnitt (50) der Aufnahme (34) formschlüssig verschoben werden kann, um ihn in den Verankerungsabschnitt (52) bzw. aus dem Verankerungsabschnitt (52) heraus zu verschieben, wenn die beiden Gehäuseteile (14, 16) zum Verbinden oder Trennen des Filtergehäuses (12) relativ zueinander verschoben werden, wobei das formschlüssige Zusammenwirken des Führungs- und Verankerungsabschnittes (32) mit dem Ein-/Ausführabschnitt (50) beim Trennen oder Verbinden des Filtergehäuses (12) zur Führung der Gehäuseteile (14, 16) relativ zueinander dient.

2. Filtereinrichtung nach Anspruch 1, **dadurch gekennzeichnet, dass** der Führungs- und Verankerungsabschnitt (32) in der Aufnahme (34) nur in dem Verankerungsbereich (52) vom ersten Drehzustand in den zweiten Drehzustand gedreht werden kann und umgekehrt.

3. Filtereinrichtung nach Anspruch 1 oder 2, **dadurch gekennzeichnet, dass** einer der wenigstens zwei Gehäuseteile (14) wenigstens teilweise in den anderen Gehäuseteil (16) eingesteckt werden kann und die Aufnahme (34) in einer Wand des einsteckbaren Gehäuseteils (14) und der Dreheinsatz (30) von außen betätigbar in einer Wand des anderen Gehäuseteils (16) untergebracht ist.

4. Filtereinrichtung nach einem der vorigen Ansprüche, **dadurch gekennzeichnet, dass** der Führungs- und Verankerungsabschnitt des Dreheinsatzes (30) einen länglichen geraden Steg (32) aufweist, der beim Drehen des Dreheinsatzes (30) um eine in Längsrichtung des Steges (32) mittige Querachse (44) drehbar ist, der Ein-/Ausführabschnitt der Aufnahme (34) einen geraden Schlitz (50) aufweist, in dem der Steg (32) in der ersten Drehposition in Längsrichtung des Stegs (32) verschiebbar ist, wobei zwei gegenüberliegende Längsseiten (42) des Steges (32) formschlüssig an entsprechenden Seitenflächen des Schlitzes (50) entlang gleiten und der Verankerungsbereich der Aufnahme (34) eine rotationssymmetrische Öffnung (52) aufweist, in der der Steg (32) beim Zusammenfallen der Achse der Öffnung (52) und der mittigen Querachse (44) des Steges (32) um seine mittige Querachse (44) drehbar ist, wobei wenigstens Teile der Querseiten (46) des Stegs (32) formschlüssig an einer radial inneren Umfangsfläche (54) der Öffnung (52) entlang gleiten.

5. Filtereinrichtung nach einem der vorigen Ansprüche, **dadurch gekennzeichnet, dass** das Filterelement (20) schlauchförmig ausgebildet ist.

6. Filtereinrichtung nach einem der vorigen Ansprüche, **dadurch gekennzeichnet, dass** das Filterelement (20) zwischen ein Einsatzrohr (14) und ein Fluidrohr (16) einsetzbar ist, die zu einem durchgehenden Strömungsrohr (12) zusammenzusetzen sind, wobei das Filterelement (20) sich im Inneren des Strömungsrohres (12) befindet, und dass das Einsatzrohr (14) eines der Bauteile (34) der Verankerungseinrichtung (18) aufweist und das Fluidrohr (16) das korrespondierende Bauteil (30) der Verankerungseinrichtung (18) aufweist.

7. Filtereinrichtung nach Anspruch 6, **dadurch gekennzeichnet, dass** das Filterelement (20) an dem Einsatzrohr (14) gehalten ist und dass das Einsatzrohr (14) zwischen ein Rohfluidrohr und das Reinfluidrohr (16) einsetzbar und wenigstens mit einem der beiden Rohre (16) verankerbar ist und dass das Einsatzrohr (14) jeweils eines der Bauteile (34) der jeweiligen Verankerungseinrichtung (18) aufweist und das Rohfluidrohr und/oder das Reinfluidrohr (16) das jeweils korrespondierenden Bauteil (30) der Verankerungseinrichtung (18) aufweist.

8. Filtereinrichtung nach einem der vorigen Ansprüche, **gekennzeichnet durch** eine Rasteinrichtung (64) und/oder eine Anschlageinrichtung (62) zur Vorgabe des zweiten Drehzustands des Führungs- und Verankerungsabschnitts (32).

9. Filtereinrichtung nach Anspruch 8, **dadurch gekennzeichnet, dass** die Rasteinrichtung (64) so ausgestaltet ist, dass beim Übergang vom ersten Drehzustand in den zweiten Drehzustand ein taktiles und/oder akustisches Signal erzeugt werden kann.

10. Filtereinrichtung nach einem der vorigen Ansprüche, **gekennzeichnet durch** eine Dichteinrichtung, insbesondere einen Dichtring (60), die in einem Verbindungsbereich der beiden Gehäuseteile (14, 16) angeordnet ist und die den Innenraum des Filtergehäuses (12) dicht von der Umgebung trennt.

## Claims

1. Filtering device (10) for filtering a fluid, in particular combustion air of an internal combustion engine, with a filter housing (12) composed of at least two housing components (14, 16), the filter housing (12) featuring an inlet for fluid to be filtered and an outlet for filtered fluid, and with a filter element (20) which is disposed in the filter housing (12) in such a way that the inlet is sealingly separated from the outlet, and with a detachable anchoring means (18) for connecting both housing components (14, 16), the anchoring means (18) featuring a rotational insert (30) with an anchoring section which is pivotally supported at a first of the housing components (16) between a first and a second rotational state, and a holding fixture (34) connected with a second of the housing components (14), the anchoring means and the holding fixture (34) cooperating in such a positive fitting that the anchoring section by passing from the first to the second rotational state in an anchoring area (52) of the holding fixture (34) can be positively fit for anchoring both housing components (14, 16), **characterized in that** the holding fixture (34) features an inlet/outlet section (50) which passes into the anchoring area (52) of the holding fixture (34), and that the anchoring section is designed as guiding and anchoring section (32) in such a way that it can be slid in a positive fitting in the first rotational state in the inlet/outlet section (50) of the holding fixture (34) in order to slide it into the anchoring section (52) and out of the anchoring section (52), respectively, when both housing components (14, 16) are slid relatively to each other for connecting or separating the filter housing (12), the positive cooperation of the guiding and anchoring section (32) with the inlet/outlet section (50) serves to guide the housing components (14, 16) relative to each other when separating or connecting the filter housing (12).

2. Filtering device according to claim 1, **characterized in that** the guiding and anchoring section (32) in the holding fixture (34) can be turned from the first rotational state into the second rotational state only in the anchoring area (52), and vice-versa,

3. Filtering device according to claim 1 or 2, **characterized in that** one of the at least two housing components (14) can be inserted at least partially into the other housing component (16) and that the holding fixture (34) is disposed in a wall of the insertable housing component (14) and the rotational insert (30) in a wall of the other housing component (16) so that it can be operated from the outside

4. Filtering device according to one of the above claims, **characterized in that** the guiding and anchoring section of the rotational insert (30) features an elongated straight rib (32) which is rotatable around a transverse axis (44) centered in longitudinal direction of the rib (32) when rotating the rotational insert (30), the inlet/outlet section (34) featuring a straight slit (50) in which the rib (32) in the first rotational position can slide in the longitudinal direction of the rib (32), two opposing longitudinal sides (42) of the rib (32) sliding in a positive fitting manner along the respective lateral faces of the slit (50) and the anchoring area of the holding fixture (34) featuring a rotation-symmetric opening (52) in which the rib (32) can rotate around its central transverse axis (44) when the axis of the opening (52) and the central transverse axis (44) of the rib (32) coincide, at least parts of the transverse sides (46) of the rib (32) sliding in a positive fitting manner along a radial inner peripheral surface (54) of the opening (52).

5. Filtering device according to one of the above claims, **characterized in that** the filter element (20) has a tubular design.

6. Filtering device according to one of the above claims, **characterized in that** the filter element (20) is insertable between an insertion tube (14) and a fluid tube (16) which are to be assembled to form an end-to-end flow tube (12), the filter element (20) being disposed inside of the fluid tube (12), and that the insertion tube (14) features one of the components (34) of the anchoring means (18) and the fluid tube (16) features the corresponding component (30) of the anchoring means (18).

7. Filtering device according to claim 6, **characterized in that** the filter element (20) is held at the insertion tube (14) and that the insertion tube (14) can be inserted between a raw fluid tube and the clear fluid tube (16) and at least anchored with one of the two tubes (16), and that the insertion tube (14) features each of one of the components (34) of the respective anchoring means (18) and the raw fluid tube and/or the clear fluid tube (16) features the respective corresponding components (30) of the anchoring means (18).

8. Filtering device according to one of the above claims, **characterized by** a locking device (64) and/or stop mechanism (62) for determining the second rotational state of the guiding and anchoring section (32).

9. Filtering device according to claim 8, **characterized in that** the locking device (64) is designed in such a way that, while passing from the first rotational state to the second rotational state, a tactile and/or acoustic signal can be generated.

10. Filtering device according to one of the above claims, **characterized by** a sealing device, in particular a seal ring (60) which is disposed in a connecting area of both housing components (14, 16) and which separates the interior area of the filter housing (12) sealingly from the surrounding.

## Revendications

1. Dispositif de filtration (10) pour la filtration d'un fluide, notamment de l'air de combustion d'un moteur à combustion interne, avec un boîtier de filtre (12) composé d'au moins deux parties de boîtier (14, 16), le boîtier de filtre (12) présentant une entrée pour un fluide devant être filtré et une sortie pour le fluide filtré, et avec un élément filtrant (20) qui est disposé dans le boîtier de filtre (12) de manière à ce que l'entrée est séparée de manière étanche de la sortie, et avec un dispositif d'ancrage (18) amovible servant à relier les deux parties de boîtier (14, 16), le dispositif d'ancrage (18) présentant un insert rotatif (30) avec une section d'ancrage qui est logée de façon rotative entre un premier et un deuxième états de rotation sur une première partie de boîtier (16) et un logement (34) relié à une deuxième partie de boîtier (14), la section d'ancrage et le logement (34) interagissant l'une avec l'autre de manière crabotée de sorte que la section d'ancrage puisse être fixée de manière crabotée par passage du premier état de rotation au deuxième état de rotation dans une zone d'ancrage (52) du logement (34) en vue de l'ancrage des deux parties de boîtier (14, 16), **caractérisé en ce que** le logement (34) présente une section d'entrée/sortie (50) qui passe dans la zone d'ancrage (52) du logement (34), et **en ce que** la section d'ancrage est exécutée comme section de guidage et d'ancrage (32) de sorte qu'elle puisse être décalée de manière crabotée, dans le premier état de rotation, dans la section d'entrée/sortie (50) du logement (34) afin de la pousser dans la section d'ancrage (52) ou de l'extraire de cette section d'ancrage (52) lorsque les deux parties de boîtier (14, 16) sont décalées l'une par rapport à l'autre pour relier ou séparer le boîtier de filtre (12), l'interaction crabotée de la section de guidage et d'ancrage (32) avec la section d'entrée/sortie (50) servant, lors de la séparation ou de la liaison du boîtier de filtre (12), à guider les parties de boîtier (14, 16) l'une par rapport à l'autre.

2. Dispositif de filtration selon la revendication 1, **caractérisé en ce que** la section de guidage et d'ancrage (32) ne peut être tournée dans le logement (34) que dans la zone d'ancrage (52) pour passer du premier état de rotation au deuxième état de rotation et vice-versa.

3. Dispositif de filtration selon la revendication 1 ou 2, **caractérisé en ce que** l'une des parties de boîtier (14), au moins au nombre de deux, peut être insérée, au moins partiellement, dans l'autre partie de boîtier (16) et que le logement (34) est logé dans une paroi de la partie de boîtier (14) insérable et l'insert rotatif (30) est logé dans une paroi de l'autre partie de boîtier (16) de manière à pouvoir être actionné de l'extérieur.

4. Dispositif de filtration selon l'une des revendications précédentes, **caractérisé en ce que** la section de guidage et d'ancrage de l'insert rotatif (30) présente une nervure (32) droite et longiligne qui peut tourner, lors de la rotation de l'insert rotatif (30), autour d'un axe transversal (44) centré en sens longitudinal de la nervure (32), la section d'entrée/sortie du logement (34) présentant une fente (50) droite dans laquelle la nervure (32) peut être décalée, dans la première position de rotation, dans le sens longitudinal de la nervure (32), deux côtés longs opposés (42) de la nervure (32) glissant de manière crabotée le long de surfaces latérales correspondantes de la fente (50) et la zone d'ancrage du logement (34) présentant une ouverture (52) symétrique en termes de rotation dans laquelle la nervure (32) peut tourner autour de son axe transversal central (44) lors de la superposition de l'axe de l'ouverture (52) et de l'axe transversal central (44) de la nervure (32), au moins des parties des côtés latéraux (46) de la nervure (32) glissant de manière crabotée le long d'une surface circonférentielle intérieure radiale (54) de l'ouverture (52).

5. Dispositif de filtration selon l'une des revendications précédentes, **caractérisé en ce que** l'élément filtrant (20) est réalisé en forme de tuyau.

6. Dispositif de filtration selon l'une des revendications précédentes, **caractérisé en ce que** l'élément filtrant (20) peut être monté entre un tube d'introduction (14) et un tube de fluide (16) qui peuvent être assemblés pour former un tube d'écoulement (12) continu, l'élément filtrant (20) se trouvant à l'intérieur du tube d'écoulement (12), et que le tube d'introduction (14) présente un des composants (34) du dispositif d'ancrage (18) et le tube de fluide (16) présente le composant (30) correspondant du dispositif d'ancrage (18).

7. Dispositif de filtration selon la revendication 6, **caractérisé en ce que** l'élément filtrant (20) est maintenu sur le tube d'introduction (14) et que le tube d'introduction (14) peut être monté entre un tube de fluide brut et le tube de fluide pur (16) et peut être ancré au moins avec l'un des deux tubes (16), et que le tube d'introduction (14) présente respectivement l'un des composants (34) du dispositif d'ancrage (18) respectif et le tube de fluide brut et/ou le tube de fluide pur (16) présente le composant (30) respectivement correspondant du dispositif d'ancrage (18).

8. Dispositif de filtration selon l'une des revendications précédentes, **caractérisé par** un dispositif d'enclenchement (64) et/ou un dispositif de butée (62) servant à déterminer le deuxième état de rotation de la section de guidage et d'ancrage (32).

9. Dispositif de filtration selon la revendication 8, **caractérisé en ce que** le dispositif d'enclenchement (64) est conçu de telle manière que, lors du passage du premier état de rotation au deuxième état de rotation, un signal tactile et/ou sonore puisse être généré.

10. Dispositif de filtration selon l'une des revendications précédentes, **caractérisé par** un dispositif d'étanchéité, notamment par une bague d'étanchéité (60) qui est disposée dans une zone de liaison des deux parties de boîtier (14, 16) et qui isole de façon étanche l'intérieur du boîtier de filtre (12) de l'environnement.
